(19) Europäisches Patentamt
European Patent Office
Office européen des brevets

(11) **EP 3 347 116 B1**

(12) **FASCICULE DE BREVET EUROPEEN**

(45) Date de publication et mention
de la délivrance du brevet:
**08.12.2021 Bulletin 2021/49**

(21) Numéro de dépôt: **16775784.8**

(22) Date de dépôt: **06.09.2016**

(51) Int Cl.:
***B01D 53/02*** *(2006.01)*   ***B01J 20/16*** *(2006.01)*
***B01D 53/04*** *(2006.01)*   ***B01D 53/047*** *(2006.01)*
***C10L 3/10*** *(2006.01)*

(86) Numéro de dépôt international:
**PCT/FR2016/052203**

(87) Numéro de publication internationale:
**WO 2017/042466 (16.03.2017 Gazette 2017/11)**

(54) **UTILISATION DE TAMIS MOLÉCULAIRES POUR LA DÉCARBONATATION DE GAZ NATUREL**

VERWENDUNG VON MOLEKULARSIEBEN ZUR DEKARBONISIERUNG VON ERDGAS

USE OF MOLECULAR SIEVES FOR DECARBONATING NATURAL GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2015 FR 1558320**

(43) Date de publication de la demande:
**18.07.2018 Bulletin 2018/29**

(73) Titulaire: **Arkema France
92700 Colombes (FR)**

(72) Inventeurs:
• **VITTENET, Jullian
34400 Lunel (FR)**
• **LUTZ, Cécile
64290 Gan (FR)**
• **LASCOUMETTES, Jean-Robert
64230 Bougarber (FR)**

(56) Documents cités:
**EP-A1- 0 433 156     WO-A1-96/03199
FR-A1- 2 618 085     FR-A1- 2 678 525
GB-A- 1 120 483      US-A- 2 973 327
US-A- 4 420 419      US-A- 5 089 034**

**Description**

L'invention concerne l'utilisation de matériaux adsorbants zéolithiques sous forme d'agglomérés comprenant au moins une zéolithe de type A, pour la séparation en phase gaz, en particulier la séparation du dioxyde de carbone ($CO_2$) dans le Gaz Naturel (GN), dans des procédés modulés en pression, soit de type PSA (Adsorption modulée en pression ou « Pressure Swing Adsorption » en langue anglaise) soit de type VSA (Adsorption modulée en vide ou « Vacuum Swing Adsorption » en langue anglaise), soit de type VPSA (procédé hybride des 2 précédents), soit de type RPSA (« Rapid Pressure Swing Adsorption » en langue anglaise), dans des procédés modulés en température de type TSA (Adsorption modulée en température ou « Temperature Swing Adsorption » en langue anglaise) et/ou dans des procédés modulés en pression et en température de type PTSA (Adsorption modulée en Pression et en Température ou « Pressure and Temperature Swing Adsorption » en langue anglaise).

Plus particulièrement, l'invention concerne l'utilisation de matériaux adsorbants zéolithiques définis ci-dessus et comprenant du calcium ou du calcium et du sodium.

L'utilisation de ces matériaux adsorbants zéolithiques est particulièrement avantageuse pour la séparation en phase gaz, et tout particulièrement pour la séparation du dioxyde de carbone ($CO_2$) dans le gaz naturel, où la cinétique de transfert et la capacité volumique d'adsorption, paramètres déterminants pour l'efficacité et la productivité globale du procédé, sont recherchées.

Le gaz naturel est utilisé dans diverses applications et son approvisionnement est généralement assuré par des canalisations. Dans d'autres cas, cette ressource est dans un premier temps liquéfiée, puis acheminée sous forme de Gaz Naturel Liquéfié (GNL). Pour éviter d'endommager les équipements de transport et de liquéfaction, le GN doit par conséquent être débarrassé de divers composés tels que l'eau, le $CO_2$ et l'hydrogène sulfuré ($H_2S$).

Concernant le $CO_2$, les concentrations dans le gaz naturel peuvent varier dans de grandes proportions, notamment de 0,1% à plus de 4% selon la source d'exploitation et le(s) prétraitement(s) déjà réalisé(s) sur le gaz. Les spécifications exigées pour ce composé dans le gaz naturel sont de 2% pour le transport dans les canalisations et de 50 ppm en amont des procédés de liquéfaction présents dans les usines de GNL et des unités flottantes de production, de stockage et de déchargement, telles que par exemple les unités off-shore, FLNG (« Floating Liquefied Natural Gas », en langue anglaise), FPSO (« Floating Production Storage Offloading » en langue anglaise), et autres.

Différentes technologies ont ainsi été développées pour éliminer le $CO_2$ dans le gaz naturel, telles que l'absorption sur solvants chimiques ou physiques, comme décrit par exemple dans le brevet US3161461. Cependant, l'utilisation de tels solvants n'est pas facile à mettre en oeuvre, notamment dans des sites confinés, que sont par exemple les FLNG, les FPSO et autres.

Les systèmes membranaires sont également des techniques utilisées pour la séparation du $CO_2$ dans des mélanges gazeux comme décrit par exemple dans les documents US8192524 et US2015/0059579. Cependant, ces procédés ne permettent pas d'atteindre les spécifications de très faibles teneurs en $CO_2$ requises pour la liquéfaction du gaz naturel.

Ainsi, pour parvenir à de faibles teneurs en $CO_2$ dans le gaz naturel, de l'ordre de quelques ppm, il est le plus souvent fait appel aux procédés de séparation par adsorption. La flexibilité et la simplicité de ces procédés sont un avantage pour leur utilisation, notamment sur des FPSO, et ils peuvent être utilisés en complément d'autres technologies. Par exemple, les documents US20140357925 et US5411721 proposent de séparer le $CO_2$ du gaz naturel à l'aide de membranes couplées à des procédés TSA et PSA.

La cinétique et la capacité d'adsorption des matériaux étant des critères majeurs pour évaluer l'efficacité et la productivité globale des procédés d'adsorption, beaucoup d'efforts ont été effectués pour développer des matériaux toujours plus efficaces et de longue durée de vie, pour la séparation du $CO_2$ en phase gaz, et plus particulièrement pour la séparation du $CO_2$ présent dans le gaz naturel.

Parmi les matériaux adsorbants zéolithiques qui sont les plus répandus dans les procédés de décarbonatation de gaz naturel, diverses structures et combinaisons de zéolithes sont proposées et disponibles. Par exemple, le brevet GB1120483 préconise l'emploi de matériaux adsorbants zéolithiques de diamètre de pore supérieur à 4 Å pour la purification de gaz naturel. Ce document n'indique cependant pas la nature du liant utilisé pour agglomérer les cristaux de zéolithes, et ne laisse entrevoir aucune possibilité d'optimisation de performances de purification. Les documents US 2,973,327, US 5,089,034 et US 4,420,419 divulguent des matériaux adsorbants zéolithiques comprenant de l'attapulgite et/ou de la sépiolite comme liant.

Le document FR2618085 décrit la purification d'air et d'hydrogène par adsorption, entre autres, de dioxyde de carbone avec un tamis moléculaire de type 5A dans lequel le liant d'agglomération est un liant argileux de la famille des kaolinites.

Par ailleurs, il a pu être constaté que les matériaux adsorbants zéolithiques utilisés dans la décarbonatation de gaz naturel subissent trop souvent un vieillissement prématuré, et ceci notamment en raison des risques d'amorphisation et/ou pseudomorphisme et/ou dégradation mécanique auxquels ils sont exposés pendant la phase de régénération avec un gaz humide ou non contenant du $CO_2$. Ce vieillissement prématuré a bien évidemment un impact négatif notable sur l'efficacité et la productivité globale des procédés d'adsorption pour la décarbonatation du gaz naturel.

D'autres matériaux tels que les matériaux organométalliques poreux (« Metal-Organic Framework materials », ou MOF en langue anglaise) sont aussi suggérés pour la décarbonatation du gaz naturel, comme décrit par exemple dans la demande WO2007111738. Cependant, ces matériaux ne sont que peu stables, voire instables en présence d'humidité, comme indiqué dans le document « Progress in adsorption-based CO2 capture by metal-organic frameworks » (J. Liu et al., Chemical Society Reviews, 41, (2012), pp. 2308-2322).

Il reste donc un besoin pour des matériaux adsorbants, en particulier des matériaux adsorbants zéolithiques efficaces pour la décarbonatation du gaz naturel, et possédant de grandes capacités d'adsorption, de meilleures cinétiques d'adsorption/désorption, permettant ainsi notamment d'améliorer les procédés de décarbonatation de gaz naturel, en particulier les procédés TSA, PSA ou PTSA.

Il reste également un besoin pour des matériaux adsorbants zéolithiques moins impactés par le vieillissement accéléré souvent observé dans les procédés de décarbonatation du gaz naturel.

La Demanderesse a découvert que les objectifs précités peuvent être atteints en totalité, ou au moins en partie, en mettant en oeuvre un matériau adsorbant zéolithique spécifiquement dédié au procédé de décarbonatation du gaz naturel, notamment de gaz naturel avant liquéfaction, et tels qu'ils vont être décrits maintenant.

Ainsi, et selon un premier aspect, l'invention concerne l'utilisation selon la revendication 1 d'au moins un matériau adsorbant zéolithique pour la décarbonatation du gaz naturel, ce matériau adsorbant comprenant:

a) de 70% à 99% en poids, de préférence de 70% à 95% en poids, de préférence encore de 70% à 90% en poids, de manière plus préférée de 75% à 90%, tout particulièrement de 80% à 90% d'au moins une zéolithe A, par rapport au poids total du matériau adsorbant zéolithique, et

b) de 1% à 30% en poids, de préférence de 5% à 30% en poids, de préférence encore de 10% à 30% en poids, de manière plus préférée de 10% à 25%, tout particulièrement de 10% à 20% par rapport au poids total du matériau adsorbant zéolithique d'au moins un liant d'agglomération comprenant au moins une argile choisie parmi les argiles magnésiennes fibreuses.

Sauf précision contraire, dans le présent exposé, les bornes de plages de valeurs des expressions « de ... à .... » ou « compris entre ... et .... » sont incluses dans lesdites plages de valeurs.

Par « argiles magnésiennes fibreuses », on entend les argiles fibreuses contenant du magnésium et de préférence les hormites, dont les principaux représentants sont la sépiolite et l'attapulgite (ou palygorskite). La sépiolite et l'attapulgite sont les hormites préférées dans le cadre de la présente invention.

On préfère en outre un matériau adsorbant zéolithique dont le liant comporte uniquement une ou plusieurs argiles de la famille des hormites. Selon un autre mode de réalisation, le liant comprend un mélange d'argile(s) constitué d'au moins une argile magnésienne fibreuse, par exemple une hormite, et au moins une autre argile, par exemple choisie parmi les montmorillonites, par exemple la bentonite. Selon un autre mode de réalisation préféré, on préfère les liants comprenant au moins 50% en poids d'au moins une hormite par rapport au poids total du liant. Les mélanges d'argiles préférés sont les mélanges sépiolite/bentonite et attapulgite/bentonite, de préférence encore attapulgite/bentonite, et de manière tout à fait préférée ces mélanges dans lesquels les hormites (sépiolite ou attapulgite) sont présentes à au moins 50% en poids par rapport au poids total du liant.

Comme indiqué précédemment, le matériau adsorbant zéolithique utile dans le cadre de la présente invention comprend au moins une zéolithe A. Ladite zéolithe A présente dans ledit matériau adsorbant zéolithique comprend, outre des ions calcium, un ou plusieurs ions alcalins et/ou alcalino-terreux, choisis parmi les ions sodium, potassium, baryum, lithium, césium, de préférence parmi les ions sodium et potassium, de préférence encore parmi les ions sodium. De manière tout à fait préférée, ladite zéolithe A comprend des ions calcium et des ions sodium.

Le matériau adsorbant zéolithique défini ci-dessus peut en outre comprendre un ou plusieurs additifs et/ou charges bien connus de l'homme du métier, tels que par exemple agents porogènes, carboxyméthylcellulose (CMC), agents de renforcement en général, fibres (telles que fibres de verre, carbone, Kevlar® et autres), nanotubes de carbone (NTC), silice colloïdale, polymères, tissus et autres. Le ou les additifs et/ou charges représentent au maximum 10% en poids, de préférence au maximum 5% en poids par rapport au poids total du matériau adsorbant zéolithique utilisable dans le cadre de la présente invention.

Selon l'invention le matériau adsorbant zéolithique utilisé dans le cadre de la présente invention comprend du calcium dont la teneur, exprimée en oxyde de calcium (CaO) est comprise entre 9,0% et 21,0%, de préférence entre 10,0% et 20,0%, et de manière encore plus préférée entre 12,0% et 17,0%, bornes incluses, exprimée en poids de CaO par rapport au poids total du matériau adsorbant zéolithique.

Par zéolithe A, on entend toute zéolithe LTA, et notamment, et de préférence les zéolithes 5A dont l'ouverture des pores est de 5Å, et les zéolithes 5APH ou zéolithes 5A à Porosité Hiérarchisée comme décrit par exemple dans la demande WO2015/019013. Les zéolithes A se caractérisent de manière générale par un rapport atomique Si/Al égal à $1 \pm 0,05$. Selon l'invention, la zéolithe A est choisie parmi les zéolithes 5A et les zéolithes 5APH. Dans un mode de réalisation préféré, l'adsorbant zéolithique utilisé dans le procédé de l'invention présente une phase cristalline zéolithique unique de type LTA.

Selon un mode de réalisation préféré, la zéolithe 5A comprise dans le matériau adsorbant zéolithique utilisé dans le cadre de la présente invention présente une teneur en du calcium, exprimée en oxyde de calcium (CaO), comprise entre 12,0% et 21,0%, de préférence entre 13,0% et 20,0%, et de manière encore plus préférée entre 14,0% et 19,0%, bornes incluses, exprimée en poids de CaO par rapport au poids total de la zéolithe.

La taille (diamètre moyen en nombre) des cristaux de zéolithe LTA utilisés pour préparer le matériau adsorbant zéolithique de l'invention, ainsi que la taille des éléments de zéolithe LTA dans le matériau adsorbant zéolithique, sont mesurées par observation au microscope électronique à balayage (MEB). De manière préférée, le diamètre moyen des cristaux de zéolithe LTA est compris entre 0,1 $\mu$m et 20 $\mu$m de préférence entre 0,5 $\mu$m et 20 $\mu$m, et de préférence encore entre 0,5 $\mu$m et 10 $\mu$m.

Selon un autre mode de réalisation préféré, le matériau adsorbant zéolithique utilisé dans le cadre de la présente invention présente une capacité d'adsorption d'eau H50 comprise entre 16% et 25%, de préférence entre 18% et 23%, et de manière encore plus préférée entre 19% et 22%. La mesure de la capacité d'adsorption d'eau H50 est explicitée plus loin dans la description.

Selon la présente invention, le rapport atomique Si/Al du matériau adsorbant zéolithique est généralement compris entre 0,5 et 2,5, bornes incluses, de préférence entre 1,0 et 2,0, de préférence encore entre 1,0 et 1,8, et de manière encore plus préférée entre 1,0 et 1,6, bornes incluses. Le rapport atomique Si/Al du matériau adsorbant zéolithique est déterminé selon la méthode décrite plus loin dans la présente description.

Le matériau adsorbant zéolithique tel qu'il vient d'être défini pour la décarbonatation du gaz naturel, peut être préparé selon toutes méthodes connues de l'homme du métier ou à partir de méthodes connues, comme par exemple celles décrites dans le document « Zeolite Molecular Sieves : Structure, Chemistry, and Use » (D. W. Breck, (1974), Ed. John Wiley & Sons, pp. 267-274, et pp. 537-541).

Le matériau adsorbant zéolithique décrit plus haut peut se présenter sous tous types de formes connues de l'homme du métier, telles que par exemple, billes, extrudés, trilobes, et autres. Les extrudés trilobés présentent l'avantage, en utilisation, de limiter les pertes de charge, par rapport à d'autres types d'extrudés, les filés (« pellets » en langue anglaise) en particulier. On préfère ainsi les matériaux adsorbants zéolithiques agglomérés et mis en forme réalisés selon toutes techniques connues de l'homme du métier telles qu'extrusion, compactage, agglomération sur assiette granulatrice, tambour granulateur, atomisation et autres.

Le diamètre volumique moyen (D50 ou « diamètre moyen en volume ») du matériau adsorbant zéolithique utilisé dans le procédé selon l'invention est généralement compris entre 0,4 mm et 5,0 mm, de préférence compris entre 0,5 mm et 4,0 mm, de préférence encore compris entre 0,6 mm et 3,8 mm. La méthode de mesure du diamètre volumique moyen du matériau adsorbant zéolithique est explicitée plus loin dans la description.

Le matériau adsorbant zéolithique utile dans le contexte de la présente invention possède en outre des propriétés mécaniques tout particulièrement appropriées aux applications auxquelles il est destiné, et notamment :

- une résistance à l'écrasement en lit (REL) mesurée selon la norme ASTM 7084-04 comprise entre 0,5 MPa et 6 MPa, de préférence entre 0,5 MPa et 4 MPa, de préférence encore entre 0,5 MPa et 3 MPa, plus préférentiellement entre 0,75 MPa et 2,5 MPa, pour un matériau de diamètre volumique moyen (D50) ou une longueur (plus grande dimension lorsque le matériau n'est pas sphérique), inférieur(e) à 1 mm,
  ou bien

- une résistance à l'écrasement en grain, mesurée selon les normes ASTM D 4179 (2011) et ASTM D 6175 (2013), comprise entre 0,5 daN et 20 daN, de préférence comprise entre 1 daN et 10 daN, de préférence encore entre 1 daN et 8 daN, pour un matériau de diamètre volumique moyen (D50) ou une longueur (plus grande dimension lorsque le matériau n'est pas sphérique), supérieur(e) ou égal(e) à 1 mm.

Selon la présente invention, les matériaux adsorbants zéolithiques décrits ci-dessus se montrent tout particulièrement adaptés et efficaces dans les procédés pour la décarbonatation du gaz naturel, en particulier dans des procédés modulés en pression, soit de type PSA, soit de type VSA, soit de type VPSA, soit de type RPSA, soit dans des procédés modulés en température de type TSA et/ou dans des procédés de type PTSA.

Plus précisément, la présente invention concerne l'utilisation d'au moins un matériau adsorbant zéolithique, comprenant au moins une zéolithe LTA, de préférence de type 5A, comme défini ci-dessus, pour la décarbonatation du gaz naturel à l'aide des procédés de séparation cités ci-dessus, de préférence les procédés TSA, PSA et PTSA, et de manière encore plus préférée le procédé TSA.

Selon un aspect préféré de la présente invention, les matériaux adsorbants zéolithiques utilisables pour la décarbonatation du gaz naturel, sont particulièrement adaptés pour la séparation du $CO_2$ d'un gaz naturel contenant moins de 5% volumique de $CO_2$, de préférence moins de 3% volumique de $CO_2$, de préférence moins de 2% volumique

de CO$_2$.

Selon un aspect préféré de la présente invention, les matériaux adsorbants zéolithiques utilisables pour la décarbonatation du gaz naturel, sont particulièrement adaptés pour la décarbonatation du gaz naturel pour des usines de GN, GNL et unités flottantes, comme décrit précédemment, à l'aide des procédés de séparation définis précédemment.

Selon un aspect préféré de la présente invention, les matériaux adsorbants zéolithiques utilisables pour la décarbonatation du gaz naturel peuvent être combinés à d'autres matériaux adsorbants dans un même procédé de séparation définis auparavant. En particulier, les matériaux adsorbants zéolithiques définis selon l'invention peuvent être utilisés en association, en mélange, ou de manière séparée avec un ou plusieurs autres matériaux adsorbants zéolithiques contenant une zéolithe choisie parmi les zéolithes 3A, 4A et 13X, et leurs mélanges, afin d'effectuer un traitement de décarbonatation complémentaire et/ou supplémentaire, et/ou afin d'éliminer d'autres impuretés, telles que eau, aromatiques et hydrocarbures.

Dans le cas où le gaz naturel contient des impuretés telles que de l'eau dans des quantités importantes, il peut être envisagé d'éliminer l'eau par adsorption spécifique sur un matériau adsorbant zéolithique spécifique, comprenant une zéolithe de type par exemple 3A et/ou 4A ou autres adsorbants bien connus de l'homme du métier, puis de conduire le gaz naturel ne contenant plus d'eau ou que des traces minimes d'eau, dans le procédé de décarbonatation selon la présente invention.

Dans le cas où le gaz naturel contient des impuretés telles que des hydrocarbures aromatiques dans des quantités importantes, mais aussi de l'eau, il peut être envisagé d'éliminer ces impuretés par adsorption spécifique sur un matériau adsorbant zéolithique, comprenant avantageusement une zéolithe de type 13X, ou sur gel de silice ou autres adsorbants bien connus de l'homme du métier, puis de conduire le gaz naturel ne contenant plus d'hydrocarbures aromatiques ni d'eau ou seulement des traces minimes d'hydrocarbures aromatiques et d'eau, dans le procédé de décarbonatation selon la présente invention.

Lorsque les gaz naturels contiennent plusieurs impuretés, notamment celles définies ci-dessus, on peut ainsi envisager un ou plusieurs traitements par adsorption sur matériaux adsorbants zéolithiques, puis effectuer le traitement de décarbonatation du gaz naturel selon la présente invention. Le procédé d'élimination des impuretés définies ci-dessus combiné au traitement de décarbonatation défini plus haut fait également partie de la présente invention.

Il est également possible de réaliser tous ces traitements postérieurement ou antérieurement ou simultanément au traitement de décarbonatation du gaz naturel comme défini précédemment, par lits d'adsorbants (matériaux adsorbants zéolithiques ou autres adsorbants bien connus de l'homme du métier par exemple gel de silice, charbon actif, alumine activée, oxyde métallique, et autres), séparés et/ou mixtes. Par « lits mixtes », on entend des mélanges de deux ou plusieurs adsorbants différents ou des superpositions de de deux ou plusieurs adsorbants différents, voire des couches alternées ou non d'adsorbants différents.

Selon un autre aspect, la présente invention concerne un procédé de décarbonatation de gaz naturel comprenant au moins les étapes suivantes :

- fourniture d'un gaz naturel comprenant du dioxyde de carbone,
- mise en contact du dit gaz naturel avec au moins un matériau adsorbant zéolithique tel que précédemment défini, et
- récupération du gaz naturel décarbonaté.

Le procédé de décarbonatation selon la présente invention est particulièrement adapté pour la décarbonatation de gaz naturel contenant moins de 5% volumique de CO$_2$, de préférence moins de 3% vol. de CO$_2$, de préférence moins de 2% volumique de CO$_2$.

Comme indiqué précédemment, le procédé de décarbonatation du gaz naturel discuté ci-dessus dans le cadre de la présente invention, est tout particulièrement adapté pour des usines de GN, GNL et unités flottantes, telles que les unités off-shore, les unités FLNG (« Floating Liquefied Natural Gas », en langue anglaise), les unités FPSO (« Floating Production Storage Offloading » en langue anglaise), et autres.

Ainsi, et selon encore un autre aspect, la présente invention concerne une unité de décarbonatation de gaz naturel, par exemple telle que définie ci-dessus, comprenant au moins un matériau adsorbant zéolithique comme décrit précédemment pour la décarbonatation de gaz naturel.

**Techniques de caractérisation**

Les propriétés physiques des matériaux adsorbants zéolithiques utilisables dans la présente invention sont évaluées par les méthodes connues de l'homme du métier et définies ci-dessous.

**Taille des cristaux de zéolithe LTA** :

L'estimation du diamètre moyen en nombre des cristaux de zéolithe LTA contenus dans les matériaux adsorbants zéolithiques, et qui sont utilisés pour la préparation dudit matériau adsorbant zéolithique, est réalisée par observation au microscope électronique à balayage (MEB), éventuellement après fracture des échantillons de matériau adsorbant zéolithique.

Afin d'estimer la taille des cristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.

### Granulométrie des matériaux adsorbants zéolithiques

La détermination du diamètre volumique moyen (D50 ou « diamètre moyen en volume », ou longueur, c'est-à-dire plus grande dimension lorsque le matériau n'est pas sphérique) du matériau adsorbant zéolithique du procédé selon l'invention est effectuée par analyse de la distribution granulométrique d'un échantillon de matériau adsorbant par imagerie selon la norme ISO 13322-2:2006, en utilisant un tapis roulant permettant à l'échantillon de passer devant l'objectif de la caméra.

Le diamètre moyen en volume est ensuite calculé à partir de la distribution granulométrique en appliquant la norme ISO 9276-2:2001. Dans le présent document, on emploie l'appellation « diamètre moyen en volume » ou bien « taille » pour les matériaux adsorbants zéolithiques. La précision est de l'ordre de 0,01 mm pour la gamme de taille des matériaux adsorbants utiles dans le cadre de la présente invention.

### Analyse chimique des matériaux adsorbants zéolithiques- rapport atomique Si/Al et teneur en oxyde de calcium (CaO)

Une analyse chimique élémentaire d'un matériau adsorbant zéolithique décrit précédemment, peut être réalisée selon différentes techniques analytiques connues de l'homme du métier. Parmi ces techniques, on peut citer la technique d'analyse chimique par fluorescence de rayons X telle que décrite dans la norme NF EN ISO 12677 : 2011 sur un spectromètre dispersif en longueur d'onde (WDXRF), par exemple Tiger S8 de la société Bruker.

La fluorescence X est une technique spectrale non destructive exploitant la photoluminescence des atomes dans le domaine des rayons X, pour établir la composition élémentaire d'un échantillon. L'excitation des atomes, qui est le plus souvent et généralement réalisé par un faisceau de rayons X ou par bombardement avec des électrons, génère des radiations spécifiques après retour à l'état fondamental de l'atome. On obtient de manière classique après étalonnage pour chaque oxyde une incertitude de mesure inférieure à 0,4% en poids.

D'autres méthodes d'analyse sont par exemple illustrées par les méthodes par spectrométrie d'absorption atomique (AAS) et spectrométrie d'émission atomique avec plasma induit par haute fréquence (ICP-AES) décrites dans les normes NF EN ISO 21587-3 ou NF EN ISO 21079-3 sur un appareil de type par exemple Perkin Elmer 4300DV.

Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde $SiO_2$ et $Al_2O_3$, ainsi que CaO, une incertitude de mesure inférieure à 0,4% en poids.

Les analyses chimiques élémentaires décrites ci-dessus permettent à la fois de vérifier le rapport atomique Si/Al de la zéolithe utilisée au sein du matériau adsorbant zéolithique, le rapport atomique Si/Al du matériau adsorbant zéolithique et la teneur en oxyde de calcium, exprimé en poids de CaO, du matériau adsorbant zéolithique. Dans la description de la présente invention, l'incertitude de mesure du rapport atomique Si/Al est de $\pm$ 5%. La mesure du rapport atomique Si/Al de la zéolithe présente dans le matériau adsorbant peut également être mesurée par spectroscopie de Résonance Magnétique Nucléaire (RMN) solide du silicium.

### Résistance mécanique des matériaux adsorbants zéolithiques :

La résistance à l'écrasement en lit (REL) des matériaux adsorbants zéolithiques tels que décrits dans la présent invention est caractérisée selon la norme ASTM 7084-04. Les résistances mécaniques à l'écrasement en grains sont déterminées avec un appareil « Grain Crushing strength » commercialisé par Vinci Technologies, selon les normes D 4179 (2011) et ASTM D 6175 (2013).

### Perte au feu des adsorbants zéolithiques :

La perte au feu est déterminée en atmosphère oxydante, par calcination de l'échantillon à l'air à une température de 950°C $\pm$ 25°C, comme décrit dans la norme NF EN 196-2 (avril 2006). L'écart-type de mesure est inférieur à 0,1%.

## Analyse qualitative et quantitative par diffraction des rayons X

La teneur en zéolithe A dans le matériau adsorbant zéolithique est évaluée par analyse de diffraction aux rayons X (DRX), selon des méthodes connues de l'homme du métier. Cette identification peut être réalisée au moyen d'un appareil DRX de la marque Bruker.

Cette analyse permet d'identifier les différentes zéolithes présentes dans le matériau adsorbant zéolithique car chacune des zéolithes possède un diffractogramme unique défini par le positionnement des pics de diffraction et par leurs intensités relatives.

Les matériaux adsorbants zéolithiques sont broyés puis étalés et lissés sur un porte échantillon par simple compression mécanique.

Les conditions d'acquisition du diffractogramme réalisé sur l'appareil D5000 Brucker sont les suivantes :

- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min$^{-1}$ ;
- plage de mesure : 3° < 2θ < 50° ;
- pas : 0,02° ;
- temps de comptage par pas : 2 secondes.

L'interprétation du diffractogramme obtenu s'effectue avec le logiciel EVA avec identification des zéolithes à l'aide de la base ICDD PDF-2, release 2011.

La quantité des fractions zéolithiques A, en poids, est mesurée par analyse par DRX, cette méthode est également utilisée pour mesurer la quantité des fractions zéolithiques autres que A. Cette analyse est réalisée sur l'appareil D5000 de la marque Bruker, puis la quantité en poids des fractions zéolithiques est évaluée au moyen du logiciel TOPAS de la société Bruker.

## Mesure de la capacité d'adsorption d'eau H50

La mesure de la capacité d'adsorption d'eau H50 est effectuée par une méthode statique qui consiste à mesurer l'accroissement de poids du matériau adsorbant zéolithique, placé dans une enceinte étanche pendant 24 heures en équilibre avec une atmosphère contrôlée à 50% d'humidité relative et à température ambiante (22°C). On exprime la capacité d'adsorption d'eau, en pourcentage, par la différence de poids entre le matériau adsorbant zéolithique après et avant le test décrit ci-dessus, divisé par le poids du matériau adsorbant zéolithique avant le test décrit ci-dessus. L'écart-type de mesure est inférieur à 0,3%.

## Exemples

La présente invention est maintenant illustrée au moyen des exemples suivants et qui ne limitent en aucune façon le champ de l'invention dont la portée de protection est conférée par les revendications. Dans ce qui suit, une masse exprimée en « équivalent anhydre » signifie une masse de produit diminuée de sa perte au feu.

Les matériaux adsorbants zéolitiques utilisés dans les exemples qui suivent sont préparés sous forme d'extrudés de 1,6 mm de diamètre et de 5 mm à 7 mm de longueur. Les matériaux adsorbants zéolithiques testés sont décrits ci-dessous :

**Échantillon A :** Matériau adsorbant zéolithique 4A Siliporite® NK 10, commercialisé par la société CECA S.A.

**Échantillon B** : Matériau adsorbant zéolithique 13X Siliporite® G5, commercialisé par la société CECA S.A.

**Échantillon C** : préparation d'un matériau adsorbant zéolithique obtenu par filage d'un mélange de zéolithe 5A (80% en poids équivalent anhydre) et de kaolin (20% en poids équivalent anhydre) en tant que liant d'agglomération, selon les techniques bien connues de l'homme du métier, comme décrit par exemple dans US3219590. La taille des cristaux de zéolithe 5A est de 7,5 μm. La teneur en CaO du matériau adsorbant zéolithique est de 12,3% en poids, son rapport Si/Al est de 1,01 et sa capacité d'adsorption d'eau H50 est de 20,5%

**Échantillon D** : préparation d'un matériau adsorbant zéolithique 5A similaire à l'Échantillon C, en remplaçant le kaolin par de l'attapulgite. La teneur en CaO du matériau adsorbant zéolithique est de 12,4% en poids, son rapport Si/Al est de 1,33 et sa capacité d'adsorption d'eau H50 est de 20,6%

**Échantillon E** : préparation d'un matériau adsorbant zéolithique similaire à l'Échantillon D en remplaçant la zéolithe 5A par de la zéolithe Y (CBV 100 de Zeolyst International).

**Échantillon F** : préparation d'un matériau adsorbant zéolithique 5A similaire à l'Échantillon D, en remplaçant l'attapulgite par un mélange pondéral 2/3 d'attapulgite et 1/3 de montmorillonite. La teneur en CaO du matériau adsorbant zéolithique est de 12,2% en poids, son rapport Si/Al est de 1,30 et sa capacité d'adsorption d'eau H50 est de 20,5%

Une quantité de 725 g de chacun des échantillons est chargée dans une installation pilote de décarbonatation (installation pilote d'adsorption de dioxyde de carbone) de gaz naturel équipée d'une colonne d'adsorption dont le diamètre interne est de 27 mm, et où la hauteur du lit d'adsorbant est de 2 m. Le gaz naturel entrant comporte 1,2% (% volumique) de $CO_2$ et 91% (% volumique) de méthane, le reste étant d'autres hydrocarbures (éthane, propane). Le débit est de 12m$^3$/h, la pression de 6 MPa, et la température est de 40°C.

## Exemple 1

Les capacités d'adsorption du $CO_2$, exprimées en pourcentage massique (g de $CO_2$ adsorbé pour 100 g de matériau adsorbant zéolithique) sont présentées dans le Tableau 1 et sont calculées à partir de l'équation suivante :

$$Capacité = \frac{Q_{gaz} \times [CO_2] \times t_{50}}{Masse \times 10}$$

où

- "$Q_{gaz}$" représente le débit moyen du courant gazeux en Nm$^3$/h,
- "$[CO_2]$" représente la concentration moyenne en entrée de $CO_2$ en ppm,
- "$t_{50}$" représente le temps stœchiométrique en heure, temps atteint quand la concentration en $CO_2$ en sortie de la colonne est égale à 50% de la concentration moyenne de $CO_2$ en entrée de la colonne, et
- "Masse" représente la masse de matériau adsorbant zéolithique (en gramme).

Les résultats des tests sur le pilote indiquent que l'échantillon D, constitué de zéolithe 5A de teneur en CaO de 12,4%, et aggloméré avec un liant de type attapulgite présente la plus grande capacité d'adsorption du $CO_2$. Les résultats sont présentés dans le Tableau 1 ci-dessous :

-- *Tableau 1* --

| Echantillon A | Echantillon B | Echantillon C | Echantillon D | Echantillon E | Echantillon F |
|---|---|---|---|---|---|
| 8,2% | 10,2% | 11,9% | 12,3% | 5,8% | 12,1% |

## Exemple 2

Les zones de transfert de masse (ZTM), exprimées en centimètres, du $CO_2$ sur les matériaux adsorbants zéolithiques sont présentées dans le Tableau 2 et sont calculées à partir de l'équation suivante ci-dessous. Plus la valeur de la ZTM du matériau adsorbant zéolithique est faible, plus la cinétique d'adsorption du matériau adsorbant zéolithique est rapide.

$$ZTM = H_{colonne} \times \frac{2 \times (t_{50} - t_{percée})}{t_{50}}$$

où

- "ZTM" représente la zone de transfert de masse, en centimètres,
- "$H_{colonne}$" représente la hauteur de la colonne, en centimètres,
- "$t_{percée}$" représente le temps de percée, en heure, comme décrit dans l'ouvrage « Encyclopedia of Chemical Processing and Design », 28 May 1999, Vol. 67, pp. 384-385 : « Zeolites », John J. McKetta Jr., CRC Press, 500 pages,
- "$t_{50}$" représente, en heure, le temps atteint lorsque la concentration en $CO_2$ en sortie de la colonne est égale à 50% de la concentration moyenne de $CO_2$ en entrée de colonne,

Les résultats des tests sur le pilote indiquent que l'échantillon D, constitué de zéolithe 5A agglomérée avec de l'attapulgite, présente une ZTM plus courte et donc une cinétique d'adsorption du $CO_2$ plus rapide que le matériau aggloméré avec du kaolin (échantillon C).

Le matériau adsorbant zéolithique à base de zéolithe 5A agglomérée avec de l'attapulgite est donc tout particulièrement adapté pour la décarbonatation du gaz naturel. Les résultats sont présentés dans le Tableau 2 ci-dessous.

-- *Tableau 2* --

| Echantillon C | Echantillon D | Echantillon F |
|---|---|---|
| 126 cm | 93 cm | 97 cm |

**Exemple 3** Des tests de vieillissement accéléré sont pratiqués sur des échantillons des matériaux adsorbants zéolithiques C et D en mettant en contact chaque échantillon avec du dioxyde de carbone pur à une température proche de celles utilisées lors de la régénération des matériaux adsorbants zéolithiques dans un procédé TSA industriel (180°C) pendant 3 mois. Cette durée de 3 mois est représentative de la durée totale de mise en contact avec le gaz de régénération chaud dans une unité industrielle. La pression de $CO_2$ est maintenue à 5 bar pendant toute la durée des tests. Après refroidissement, inertage à l'azote, l'échantillon de matériau adsorbant zéolithique est déchargé pour évaluation de la résistance mécanique à l'écrasement (RM).

Le Tableau 3 présente les résistances mécaniques à l'écrasement initiales des matériaux adsorbants zéolithiques C et D, ainsi que les valeurs obtenues après tests de vieillissement accéléré décrits ci-dessus.

-- *Tableau 3* --

| | Echantillon C | Echantillon D | Echantillon F |
|---|---|---|---|
| RM initiale | 4,0 | 3,5 | 3,7 |
| RM après vieillissement | 2,2 | 3,0 | 3,2 |

## Revendications

1. Utilisation pour la décarbonatation du gaz naturel, d'au moins un matériau adsorbant zéolithique comprenant :

   a) de 70% à 99% en poids, de préférence de 70% à 95% en poids, de préférence encore de 70% à 90% en poids, de manière plus préférée de 75% à 90%, tout particulièrement de 80% à 90% d'au moins une zéolithe A, par rapport au poids total du matériau adsorbant zéolithique, et
   b) de 1% à 30% en poids, de préférence de 5% à 30% en poids, de préférence encore de 10% à 30% en poids, de manière plus préférée de 10% à 25%, tout particulièrement de 10% à 20% par rapport au poids total du matériau adsorbant zéolithique d'au moins un liant d'agglomération comprenant au moins une argile choisie parmi les argiles magnésiennes fibreuses,
   et dans lequel
   c) la zéolithe A comprend des ions calcium;
   d) le matériau adsorbant zéolithique comprend du calcium dont la teneur, exprimée en oxyde de calcium (CaO) est comprise entre 9,0% et 21,0%;
   e) la zéolithe A est choisie parmi les zéolithes 5A et les zéolithes 5APH;
   f) le rapport atomique Si/Al du matériau adsorbant zéolithique est compris entre 0,5 et 2,5.

2. Utilisation selon la revendication 1, dans laquelle les argiles magnésiennes fibreuses sont les hormites, et de préférence sont choisies de préférence parmi la sépiolite et l'attapulgite.

3. Utilisation selon la revendication 1 ou la revendication 2, dans laquelle le liant comprend un mélange d'argile(s) constitué d'au moins une argile magnésienne fibreuse, et au moins une autre argile.

4. Utilisation selon l'une quelconque des revendications précédentes, dans laquelle la zéolithe A comprend des ions calcium et des ions sodium.

5. Utilisation selon l'une quelconque des revendications précédentes, dans laquelle le matériau adsorbant zéolithique comprend du calcium dont la teneur, exprimée en oxyde de calcium (CaO) est comprise entre 10,0% et 20,0%, et de manière encore plus préférée entre 12,0% et 17,0%, bornes incluses, exprimée en poids de CaO par rapport au poids total du matériau adsorbant zéolithique.

6. Utilisation selon l'une quelconque des revendications précédentes, dans laquelle le rapport atomique Si/Al du matériau adsorbant zéolithique est compris entre 1,0 et 2,0, de préférence encore entre 1,0 et 1,8, et de manière encore plus préférée entre 1,0 et 1,6, bornes incluses.

7. Utilisation selon l'une quelconque des revendications précédentes, dans laquelle le procédé de décarbonatation du gaz naturel est un procédé TSA, ou un procédé PSA ou un procédé PTSA, et de manière encore préférée un procédé TSA.

8. Utilisation selon l'une quelconque des revendications précédentes, dans laquelle le matériau adsorbant zéolithique est utilisé en association, en mélange, ou de manière séparée avec un ou plusieurs autres matériaux adsorbants zéolithiques contenant une zéolithe choisie parmi les zéolithes 3A, 4A et 13X, et leurs mélanges.

9. Procédé de décarbonatation de gaz naturel comprenant au moins les étapes suivantes :

   • fourniture d'un gaz naturel comprenant du dioxyde de carbone,
   • mise en contact du dit gaz naturel avec au moins un matériau adsorbant zéolithique tel que défini dans l'une quelconque des revendications 1 à 6, et
   • récupération du gaz naturel décarbonaté.

10. Procédé selon la revendication 9. dans lequel le gaz naturel mis en contact dudit au moins un matériau adsorbant zéolithique, contient moins de 5% volumique de $CO_2$, de préférence moins de 3% volumique de $CO_2$, de préférence moins de 2% volumique de $CO_2$.

11. Unité de décarbonatation de gaz naturel comprenant au moins un matériau adsorbant zéolithique tel que défini dans l'une quelconque des revendications 1 à 6.

12. Unité de décarbonatation de gaz naturel selon la revendication 11, qui est une usine de GN, une usine de GNL, une unité flottante, une unité flottante off-shore, une unité FLNG, ou une unité FPSO.


**Patentansprüche**

1. Verwendung, zur Entkarbonisierung von Erdgas, mindestens eines zeolithischen adsorbierenden Materials, das Folgendes umfasst:

   a) 70 % bis 99 % nach Gewicht, vorzugsweise 70 % bis 95 % nach Gewicht, mit noch größerem Vorzug 70 % bis 90 % nach Gewicht, stärker bevorzugt 75 % bis 90 %, ganz besonders 80 % bis 90 % mindestens eines Zeoliths A, bezogen auf das Gesamtgewicht des zeolithischen adsorbierenden Materials, und
   b) 1 % bis 30 % nach Gewicht, vorzugsweise 5 % bis 30 % nach Gewicht, mit noch größerem Vorzug 10 % bis 30 % nach Gewicht, stärker bevorzugt 10 % bis 25 %, ganz besonders 10 % bis 20 %, bezogen auf das Gesamtgewicht des zeolithischen adsorbierenden Materials, mindestens eines agglomerierenden Bindemittels, das mindestens eine Tonsubstanz umfasst, welche aus den faserartigen magnesiumhaltigen Tonen ausgewählt ist,

   wobei weiterhin

   c) der Zeolith A Calciumionen umfasst;
   d) das zeolithische adsorbierende Material Calcium umfasst, wobei dessen Gehalt, ausgedrückt als Calciumoxid (CaO) im Bereich von 9,0 % bis 21,0 % liegt;
   e) der Zeolith A aus den Zeolithen 5A und den Zeolithen 5APH ausgewählt ist;
   f) das Si/Al-Atomverhältnis des zeolithischen adsorbierenden Materials im Bereich von 0,5 bis 2,5 liegt.

2. Verwendung nach Anspruch 1, wobei es sich bei den faserartigen magnesiumhaltigen Tonen um Hormite handelt, wobei vorzugsweise diese vorzugsweise aus Sepiolith und Attapulgit ausgewählt sind.

3. Verwendung nach Anspruch 1 oder Anspruch 2, wobei das Bindemittel eine Tonsubstanzmischung umfasst, die aus mindestens einer faserartigen magnesiumhaltigen Tonsubstanz und mindestens einer weiteren Tonsubstanz besteht.

4. Verwendung nach einem beliebigen der vorhergehenden Ansprüche, wobei der Zeolith A Calciumionen und Natriumionen umfasst.

5. Verwendung nach einem beliebigen der vorhergehenden Ansprüche, wobei das zeolithartige adsorbierende Material Calcium umfasst, wobei dessen Gehalt, ausgedrückt in Calciumoxid (CaO), im Bereich von 10,0 % bis 20,0 %, und mit noch größerem Vorzug von 12,0 % bis 17,0 %, einschließlich der Grenzwerte liegt, ausgedrückt nach Gewicht an CaO bezogen auf das Gesamtgewicht des zeolithartigen adsorbierenden Materials.

6. Verwendung nach einem beliebigen der vorhergehenden Ansprüche, wobei das Si/Al-Atomverhältnis des zeolithartigen adsorbierenden Materials im Bereich von 1,0 bis 2,0, stärker bevorzugt von 1,0 bis 1,8, und mit noch größerem Vorzug von 1,0 bis 1,6 einschließlich der Grenzwerte liegt.

7. Verwendung nach einem beliebigen der vorhergehenden Ansprüche, wobei es sich bei dem Verfahren zur Entkarbonisierung von Erdgas um ein TSA-Verfahren oder ein PSA-Verfahren oder ein PTSA-Verfahren handelt, wobei ein TSA-Verfahren wiederum bevorzugt wird.

8. Verwendung nach einem beliebigen der vorhergehenden Ansprüche, wobei das zeolithische adsorbierende Material in Verbindung mit, in Mischung mit oder getrennt von einem oder mehreren anderen zeolithischen adsorbierenden Materialien verwendet wird, die einen Zeolith enthalten, welcher aus den Zeolithen 3A, 4A und 13X sowie deren Mischungen ausgewählt ist.

9. Verfahren zur Entkarbonisierung von Erdgas, das zumindest die folgenden Schritte umfasst:

   • Bereitstellen eines Erdgases, das Kohlendioxid umfasst,
   • Inkontaktbringen des Erdgases mit mindestens einem zeolithischen adsorbierenden Material gemäß der Begriffsbestimmung in einem beliebigen der Ansprüche 1 bis 6, und
   • Gewinnen des entkarbonisierten Erdgases.

10. Verfahren nach Anspruch 9, wobei das Erdgas, welches mit dem mindestens einen zeolithischen adsorbierenden Material in Kontakt gebracht wird, weniger als 5 Volumen-% an $CO_2$, vorzugsweise weniger als 3 Volumen-% an $CO_2$, vorzugsweise weniger als 2 Volumen-% an $CO_2$ enthält.

11. Einheit zum Entkarbonisieren vom Erdgas, die mindestens ein zeolithisches adsorbierendes Material gemäß der Begriffsbestimmung in einem beliebigen der Ansprüche 1 bis 6 umfasst.

12. Einheit zum Entkarbonisieren vom Erdgas nach Anspruch 11, wobei es sich um ein Erdgas-Werk, ein LPG-Werk, eine schwimmende Einheit, eine schwimmende Offshore-Einheit, eine FLNG-Einheit oder eine FPSO-Einheit handelt.

**Claims**

1. Use, for the decarbonation of natural gas, of at least one zeolitic absorbent material comprising:

   a) from 70% to 99% by weight, preferably from 70% to 95% by weight, preferably again from 70% to 90% by weight, more preferably from 75% to 90% and very particularly from 80% to 90% of at least one zeolite A, with respect to the total weight of the zeolitic absorbent material, and
   b) from 1% to 30% by weight, preferably from 5% to 30% by weight, preferably again from 10% to 30% by weight, more preferably from 10% to 25% and very particularly from 10% to 20%, with respect to the total weight of the zeolitic absorbent material, of at least one agglomeration binder comprising at least one clay chosen from fibrous magnesium clays, and in which
   c) the zeolite A comprises calcium ions;
   d) the zeolitic absorbent material comprises calcium, the content of which, expressed as calcium oxide (CaO), is between 9.0% and 21.0%;
   e) the zeolite A is chosen from the zeolites 5A and the zeolites 5APH;

f) the Si/Al atomic ratio of the zeolitic absorbent material is between 0.5 and 2.5.

2.  Use according to Claim 1, in which the fibrous magnesium clays are hormites and preferably are preferably chosen from sepiolite and attapulgite.

3.  Use according to Claim 1 or Claim 2, in which the binder comprises a mixture of clays consisting of at least one fibrous magnesium clay and at least one other clay.

4.  Use according to any one of the preceding claims, in which the zeolite A comprises calcium ions and sodium ions.

5.  Use according to any one of the preceding claims, in which the zeolitic absorbent material comprises calcium, the content of which, expressed as calcium oxide (CaO), is between 10.0% and 20.0% and more preferably still between 12.0% and 17.0%, limits included, expressed as weight of CaO with respect to the total weight of the zeolitic absorbent material.

6.  Use according to any one of the preceding claims, in which the Si/Al atomic ratio of the zeolitic absorbent material is between 1.0 and 2.0, preferably again between 1.0 and 1.8 and more preferably still between 1.0 and 1.6, limits included.

7.  Use according to any one of the preceding claims, in which the process for the decarbonation of natural gas is a TSA process, or a PSA process or a PTSA process, and more preferably a TSA process.

8.  Use according to any one of the preceding claims, in which the zeolitic absorbent material is used in combination, as a mixture or separately, with one or more other zeolitic absorbent materials containing a zeolite chosen from the zeolites 3A, 4A and 13X, and their mixtures.

9.  Process of the decarbonation of natural gas comprising at least the following stages:

    • providing a natural gas comprising carbon dioxide,
    • bringing the said natural gas into contact with at least one zeolitic absorbent material as defined in any one of Claims 1 to 6, and
    • recovering the decarbonated natural gas.

10. Process according to Claim 9, in which the natural gas brought into contact with the said at least one zeolitic absorbent material contains less than 5% by volume of $CO_2$, preferably less than 3% by volume of $CO_2$ and preferably less than 2% by volume of $CO_2$.

11. Unit for the decarbonation of natural gas, comprising at least one zeolitic absorbent material as defined in any one of Claims 1 to 6.

12. Unit for the decarbonation of natural gas according to Claim 11, which is an NG plant, an LNG plant, a floating unit, an offshore floating unit, an FLNG unit or an FPSO unit.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3161461 A
- US 8192524 B
- US 20150059579 A
- US 20140357925 A
- US 5411721 A
- GB 1120483 A
- US 2973327 A
- US 5089034 A
- US 4420419 A
- FR 2618085
- WO 2007111738 A
- WO 2015019013 A
- US 3219590 A

**Littérature non-brevet citée dans la description**

- **J. LIU et al.** Progress in adsorption-based CO2 capture by metal-organic frameworks. *Chemical Society Reviews,* 2012, vol. 41, 2308-2322
- **D. W. BRECK.** Zeolite Molecular Sieves : Structure, Chemistry, and Use. John Wiley & Sons, 1974, 267-274, 537-541
- Zeolites. **JOHN J. MCKETTA JR.** Encyclopedia of Chemical Processing and Design. CRC Press, 28 Mai 1999, vol. 67, 384-385, 500